# EUROPÄISCHE PATENTSCHRIFT

(11) **EP 1 826 504 B1**
(45) Veröffentlichungstag und Bekanntmachung des Hinweises auf die Patenterteilung: **12.04.2017**
(21) Anmeldenummer: 07102337.8
(22) Anmeldetag: 14.02.2007
(51) Int. Cl.: F24J 2/04, F24J 2/52

(54) **Befestigungsvorrichtung für ein Trägerprofil**
Mounting device for a support profile
Dispositif de fixation pour un profil de support

(30) Priorität: 24.02.2006 DE 102006000090
(43) Veröffentlichungstag der Anmeldung: 29.08.2007
(73) Patentinhaber: Ernst Schweizer AG, Metallbau, 8908 Hedigen (CH)
(72) Erfinder: Rubio, Daniel, 28007, Madrid (ES); Burtscher, Norbert, 6712, Thüringen (AT)
(74) Vertreter: Frischknecht, Harry Ralph

(56) Entgegenhaltungen:
- DE-A1- 10 031 326
- DE-A1- 10 224 437
- DE-A1- 10 344 202
- DE-U1- 9 109 605
- DE-U1- 20 119 629
- DE-U1- 20 204 963
- DE-U1- 20 217 489
- DE-U1- 29 919 147

## Beschreibung

Die Erfindung betrifft eine Befestigungsvorrichtung für eine beabstandete Befestigung eines Trägerprofils, insbesondere eines Trägerprofils für Solarmodule, an einer Dachunterkonstruktion, der im Oberbegriff des Patentanspruchs 1 genannten Art.

Bei bekannten Befestigungsanordnungen von Solarmodulen oder Solärpaneelen auf einem Schrägdach werden für jedes Solärmodul zwei Reihen von Befestigungsvorrichtungen für eine beabstandete Befestigung von Trägerprofilen auf einer tragfähigen Dachunterkonstruktion befestigt. Anschliessend wird auf jeder Reihe ein Trägerprofil als Auflageprofil für die Solarmodule an der Befestigungsvorrichtung befestigt. Mittels geeigneter Haltevorrichtungen werden die Solarmodule an dem Trägerprofil festgelegt.

Solche Befestigungsvorrichtungen umfassen einen Dachhaken beziehungsweise einen Sparrenhaken, der eine Befestigungsplatte und einen im Wesentlichen parallel zur Befestigungsplatte angeordneten Festlegeabschnitt für das Trägerprofil aufweist, sowie Sechskantschrauben als Befestigungsmittel zur Festlegung des Trägerprofils an dem Festlegeabschnitt des Dachhakens. Der Festlegeabschnitt weist ein Langloch für die Durchführung der Sechskantschraube auf und ist über einen mehrfach gebogenen Verbindungsabschnitt mit der Befestigungsplatte verbunden. Der Verbindungsabschnitt ist derart geformt, dass der Dachhaken unter eine Dacheindeckung, wie z. B. unter Dachziegel, geführt werden und unmittelbar beispielsweise am Dachsparren befestigt werden kann.

Vor der Montage der Solarmodule werden am Montageort der Dachhakens einige Teile der Dacheindeckung, wie z. B. Dachziegel, entfernt und die Dachhaken beispielsweise mit zwei Holzschrauben auf die Dachsparren geschraubt. Anschliessend werden in eine Befestigungsnut des Trägerprofils von einem Ende her mehrere Sechskantschrauben eingeschoben und grob entlang der Befestigungsnut verteilt. Das freie Ende der Sechskantschrauben wird durch die Langlöcher der Festlegeabschnitte der entsprechenden Dachhaken gesteckt, das Trägerprofil ausgerichtet und das Trägerprofil mittels an den Sechskantschrauben angeordneten Stoppmuttem an dem Dachhakeh vorspannt.

Nachteilig an der bekannten Lösung ist, dass mit einer solchen Befestigungsvorrichtung das Handling der Trägerprofile auf Schrägdächern, die Dachneigungen von mehr als 45° aufweisen können, sowie in grosser Höhe über Boden nicht einfach ist. Insbesondere das Einfädeln der Sechskantschrauben und das rückwärtige Sichern mittels der Stoppmuttem sind zeitaufwändig und für den Anwender äusserst unkomfortabel.

Aus der DE 101 32 557 A1 ist eine Befestigungsvorrichtung für Trägerprofile für Solarmodule bekannt, die einen Dachhaken mit einem senkrecht zur Befestigungsplatte ausgerichteten Festlegeabschnitt mit einer Durchführöffnung für eine Befestigungsschraube als Befestigungsmittel aufweist. Das zu befestigende Trägerprofil weist seitliche Schraubkanäle auf, in welche die Befestigungsschraube einschraubbar ist. Mit dieser Befestigungsvorrichtung entfällt eine rückwärtige Sicherung der Befestigungsschraube.

Nachteilig an der bekannten Lösung ist, dass auch mit dieser Befestigungsvorrichtung das Handling der Trägerprofile auf Schrägdächem sowie in grosser Höhe über Boden nicht einfach ist, da das Trägerprofil bis zu dessen Fixierung an dem Festlegeabschnitt des Dachhakens temporär gehalten werden muss.

Aus der DE 100 31 326 A1 geht eine Solaranordnung hervor, bei der Auflageprofile über Profilhalter mit Dachsparren verbunden sind. Ein Profilhalter weist dabei eine Klemmplatte mit einer Gewindebohrung für die Aufnahme einer Schraube auf. Die DE 103 44 202 A1 offenbart Dachhaken für Solarmodule mit Klemmelementen und Klemmschrauben. Die DE 201 19 629 U1 offenbart Dachhaken für Photovoltaikmodule, wobei die Dachhaken über Laschen und Zwischenlagen mit Hohlkörperprofilen verbunden werden. Die DE 102 24 437 A1 beschreibt federbelastete Haltemittel für Solaranordnungen.

Aufgabe der Erfindung ist es, eine Befestigungsvorrichtung für eine beabstandete Befestigung eines Trägerprofils, insbesondere eines Trägerprofils für Solarmodule; an einer tragfähigen Dachunterkonstruktion zu schaffen, die eine einfache Montage des Trägerprofils auf Schrägdächern ermöglicht.

Die Aufgabe ist durch die Merkmale des unabhängigen Anspruchs gelöst. Vorteilhafte Weiterbildungen sind in den Unteransprüchen dargelegt.

Eine erfindungsgemässe Befestigungsvorrichtung ist dadurch gekennzeichnet, dass das Halteelement zumindest ein von der ersten Seite des Halteelementes abragendes Anschlagelement für das Trägerprofil aufweist, wobei mit dem Anschlagelement das auf den Festlegeabschnitt des Dachhakens ablegbare Trägerprofil haltbar ist

Gemäss der Erfindung umfasst das Befestigungsmittel eine Befestigungsschraube und ein Halteelement, das einen Halteabschnitt für das Trägerprofil sowie eine Durchführöffnung für die Befestigungsschraube aufweist.

Wird das Trägerprofil auf den Festlegeabschnitt aufgelegt, kommt dieses mit dem Halteelement in Anlage und kann nicht von dem Dachhaken herunterrutschen, wobei das Trägerprofil gleichzeitig grob vorpositioniert wird. Anschliessend werden das Trägerprofil und das Halteelement derart ausgerichtet, dass der Halteabschnitt des Halteelements mit einer Befestigungsnut in dem Trägerprofil in Eingriff bringbar ist. Die Befestigungsschraube umfasst beispielsweise eine Sechskantschraube, die von der Seite des Festlegeabschnitts in das Langloch eingeführt ist, die der Befestigungsplatte des Dachhakens zugewandt ist. Zusätzlich ist eine Mutter vorgesehen, die auf das freie Ende der Befestigungsschraube angeordnet ist. Vorteilhaft wird die Befestigungsvorrichtung dem Anwender vormontiert zur Verfügung gestellt. Durch Verspannen der Befestigungsschraube wird das Trägerprofil an dem Dachhaken festgelegt. Die erfindungsgemässe Befestigungsvorrichtung gewährleistet eine sichere Befestigung des Trägerprofils weitgehend unabhängig von der Dicke des die Befestigungsnut begrenzenden Begrenzungsstegs.

Der Anwender hat mit der erfindungsgemässen Befestigungsvorrichtung für die erforderlichen Montageschritte zur Befestigung des Trägerprofils auch auf Schfägdäöhern mit grosser Dachneigung beide Hände zur Verfügung, was eine einfache Montage ermöglicht. Ein aufwändiges Einschieben von Befestigungsschrauben in eine Befestigungsnut des Trägerprofils und ein Einstecken der Befestigungsschraube in das Langloch des Festlegeabschnitts des Dachhakens sowie das ankomfortable rückwärtige Sichem entfällt mit der erfindungsgemässen Befestigungsvorrichtung.

Erfindungsgemäss weist das Halteelement zumindest ein, von einer ersten Seite des Halteelementes abragendes Anschlagelement für das Trägerprofil auf, wodurch das auf den Festlegeabschnitt des Dachhakens abgelegte Trägerprofil sicher gehalten wird. Vorteilhaft sind zwei Anschlagelemente für das Trägerprofils beabstandet zueinander an dem Halteelement angeordnet. Auf das Trägerprofil können Torsionsmomente einwirken. Durch das zumindest eine Anschlagelement wird eine sichere Übertragung auf das Halteelement und Einleitung in den Dachhaken der allfällig auftretenden Torsionskräfte gewährleistet. Die Befestigung des Trägerprofils kann auch bei steilen Schrägdächem erfolgen, auf denen sich der Anwender mit einer Hand während dem Befestigungsvorgang des Trägerprofils zusätzlich sichern muss. Das zumindest eine von der ersten Seite des Halteelementes abragende Anschlagelement stützt das Trägerprofil bis zu dessen Fixierung ab und verhindert damit zusätzlich ein Herunterrutschen des Trägerprofils von dem Dachhaken.

Bevorzugt weist das Halteelement zumindest zwei, von einer zweiten Seite des Halteelementes abragende Vorsprünge auf, die den Festlegeabschnitt des Dachhakens zumindest bereichsweise umgreifen. Diese Vorsprünge führen das Halteelement an dem Festlegeabschnitt des Dachhakens und bilden beim Verspannen der Befestigungsschraube eine Verdrehsicherung für das Halteelement, wodurch eine einfache Montage des Trägerprofils sichergestellt ist. Unter der zweiten Seite des Halteelementes wird die Seite des Halteelementes verstanden, die im vormontierten Zustand der Befestigungsvorrichtung dem Festlegeabschnitt des Dachhakens zugewandt ist.

Vorzugsweise ist ein Federelement zwischen dem Halteelement und dem Festlegeabschnitt vorgesehen, welches das Halteelement im unverspannten Zustand der Befestigungsvorrichtung in einem Abstand zum Festlegeabschnitt des Dachhakens sicherstellt. Der Halteabschnitt des Halteelementes ist vorteilhaft derart zum Festlegeabschnitt beabstandet, dass beim Auflegen des Trägerprofils auf den Festlegeabschnitt der Halteabschnitt in die Befestigungsnut des Trägerprofils eindringen kann. Ein zusätzliches Einführen des Halteabschnitts in die Befestigungsnut im Trägerprofil entfällt bei dieser vorteilhaften Ausführungsform, wodurch der Montagevorgang zusätzlich vereinfacht ist.

Bevorzugt ist das Federelement als Schraubenfeder ausgebildet, welche aufgrund ihrer Federeigenschaften gut geeignet ist. Besonders vorteilhaft ist das Federelement als Kegeldruckfeder ausgebildet, welche sich beim Verspannen der Befestigungsschraube vorteilhaft zu einer Scheibe zusammendrücken lässt und daher nur eine geringe bauhöhe benötigt. Somit lassen sich auch bei der Anordnung eines Federelementes zwischen dem Halteelement und dem Festlegeabschnitt Trägerprofile mit einer Befestigungsnut, die zumindest einseitig einen dünnen Begrenzungssteg aufweist, sicher und einfach mit der erfindungsgemässen Befestigungsvorrichtung an dem Dachhaken befestigen.

Vorzugsweise umfasst die Befestigungsschraube eine Schlossschraube, deren benachbart zum Schraubenkopf angeordneter, polygonaler Abschnitt vorteilhaft bereits im vormontierten Zustand der Befestigungsvorrichtung in dem Langloch zu liegen kommt. Der polygonale Abschnitt ist weiter vorteilhaft auf die Breitenerstreckung des Langlochs abgestimmt, wodurch ein Gegenhalten der Befestigungsschraube beim Verspannen derselben entfällt.

Bevorzugt ist die Befestigungsschraube axial durch das Federelement hindurchgeführt, wodurch das gesamte Befestigungsmittel gegen ein unbeabsichtigtes Verkippen gesichert ist.

Vorteilhafterweise ist das Halteelement einteilig als Stanz-/Biegeteil ausgebildet. Der Dachhaken wie auch das Halteelement sind vorteilhaft aus einem Blech gefertigt.

Die Erfindung wird nachstehend anhand eines Ausführungsbeispieles näher erläutert. Es zeigen:
- Fig. 1: Eine Seitenansicht einer erfindungsgemässen Befestigungsvorrichtung;
- Fig. 2: eine Detailansicht aus Fig. 1 auf ein Befestigungsmittel der Befestigungsvorrichtung; und
- Fig. 3: eine Ansicht auf das Befestigungsmittel entlang der Linie III-III in Fig. 2.

Grundsätzlich sind in den Figuren gleiche Teile mit den gleichen Bezugszeichen versehen.

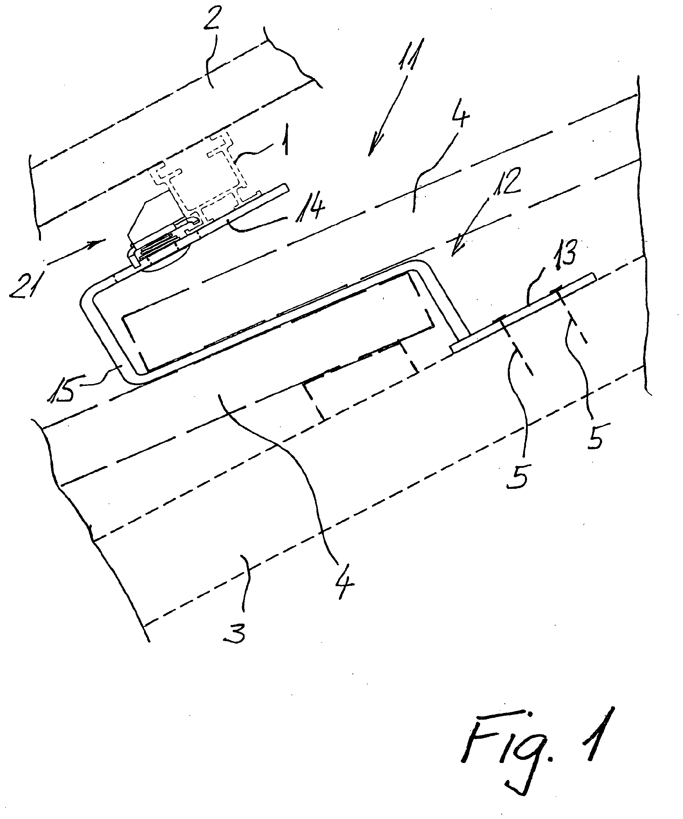

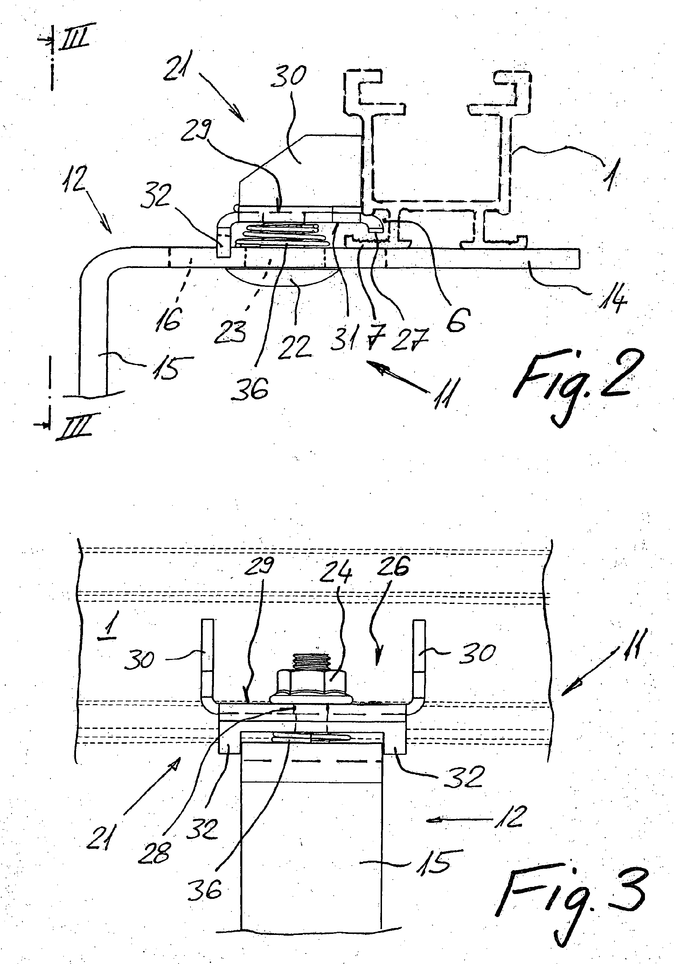

Die in den Figuren 1 bis 3 dargestellte Befestigungsvorrichtung 11 für eine beabstandete Befestigung eines Trägerprofils 1 für Solarmodule 2 an einer Dachunterkonstruktion 3, wie an einem tragfähigen Dachsparren, umfasst einem Dachhaken 12 und ein Befestigungsmittel 21 zur Festlegung des Trägerprofils 1 an dem Dachhaken 12. Der Dachhaken 12 weist eine Befestigungsplatte 13 und einen im Wesentlichen parallel zur Befestigungsplatte 13 angeordneten Festlegeabschnitt 14 für das Trägerprofil 1 auf. Der Festtegeäbschnitt 14 ist über einen mehrfach umgebogenen Verbindungsabschnitt 15 mit der Befestigungsplatte 13 verbunden, damit der Dachhaken 12 zum Befestigen auf der Dachunterkonstruktion 3 durch die Dachziegel 4 hindurchgeführt werden kann. Der Festlegeabschnitt 14 ist mit einem in seine Längserstreckung verlaufenden Langloch 16 versehen.

Das Befestigungsmittel 21 umfasst eine Befestigungsschraube 22 und ein Halteelement 26. Die Befestigungsschraube 22 ist als eine Schlossschraube ausgebildet, deren polygonaler Abschnitt 23 auf die Breitenerstreckung des Langtochs 16 im Festlegeabschnitt 14 abgestimmt ist. An dem freien Ende der Befestigungsschraube 22 ist eine Mutter 24 angeordnet.

Das Halteelement 26 weist einen Halteabschnitt 27 für das Trägerprofil. 1 sowie eine Durchführöffnung 28 für die Befestigungsschraube 22 auf. Von einer ersten Seite 29 des Halteelementes 26 ragen zwei Anschlagelemente 30 für das Trägerprofil 1 ab. Von einer der ersten Seite 29 gegenüberliegenden zweiten Seite 31 des Halteelementes 26 ragen zwei Vorsprünge 32 ab, die den Festlegeabschnitt 14 des Dachhakens 12 bereichsweise umgreifen und so eine Führung und Verdrehsicherung für das Halteelement 26 bilden. Der Halteabschnitt 27 des Halteelementes 26 ist ebenfalls von der zweiten Seite 31 des Halteelementes 26 abragend ausgebildet. Das Halteelement 26 ist einteilig als Stanz-/Biegeteil ausgebildet.

Zwischen dem Halteelement 26 und dem Festlegeabschnitt 14 ist als Federelement 36 eine Kegeldruckfeder vorgesehen. Die Befestigungsschraube 22 ist axial durch das Federelement 36 hindurchgeführt.

Nachfolgend wird ein möglicher Montagevorgang der erfindungsgemässen Befestigungsvorrichtung 11 beschrieben. Im Montagebereich der Befestigungsvorrichtung 11 werden die Dachziegel 4 entfernt und mit zwei durch die Befestigungsplatte 13 des Dachhakens 12 hindurchgeführte Holzschrauben 5 der Dächhaken 12 an der Dachunterkonstruktion 3 festgelegt. Anschliessend wird das Trägerprofil 1 auf den Festlegeabschnitt 14 des Dachhakens 12 aufgelegt, wobei dieses mit dem Halteelement 26 und den davon abragenden Anschlagelementen 30 in Anlage kommt. Der Halteabschnitt 27 des Halteelementes 26 dringt in der unverspannten Stellung des Befestigungsmittels 21 in eine Befestigungsnut 6 ein. Nach dem Ausrichten des Trägerprofils 1 wird die Befestigungsschraube 22 über die Mutter 24 verspannt, wobei das Federelement 36 zusammengedrückt und das Trägerprofil 1 über den die Befestigungsnut 6 begrenzenden Begrenzungssteg 7 an der Befestigungsvorrichtung 11 festgelegt wird.

## Patentansprüche

1. Befestigungsvorrichtung für eine beabstandete Befestigung eines Trägerprofils (1) an einer Dachunterkonstruktion (3) mit einem Dachhaken (12), der eine Befestigungsplatte (13) und einen im Wesentlichen parallel zur Befestigungsplatte (13) angeordneten Festlegeabschnitt (14) mit einem Befestigungsmittel (21) für das Trägerprofil (1) aufweist,
wobei das Befestigungsmittel (21) eine Befestigungsschraube (22) und ein Halteelement (26) umfasst, das einen Halteabschnitt (27) für das Trägerprofil (1) sowie eine Durchführöffnung (28) für die Befestigungsschraube (22) aufweist,
wobei das Halteelement (26) eine erste Seite (29) und eine zweite Seite (31) aufweist, wobei die zweite Seite (31) der ersten Seite (29) gegenüberliegt und dem Festlegeabschnitt (14) des Dachhakens (12) zugewandt ist,
**dadurch gekennzeichnet,**
**dass** das Halteelement (26) zumindest ein von der ersten Seite (29) des Halteelementes (26) abragendes Anschlagelement (30) für das Trägerprofil (1) aufweist, wodurch das auf den Festlegeabschnitt (14) des Dachhakens (12) ablegbare Trägerprofil (1) haltbar ist.

2. Befestigungsvorrichtung nach Anspruch 1, **dadurch gekennzeichnet, dass** das Halteelement (26) zumindest zwei von der zweiten Seite (31) des Halteelementes (26) abragende Vorsprünge (32) aufweist, die den Festlegeabschnitt (14) des Dachhakens (12) zumindest bereichsweise umgreifen.

3. Befestigungsvorrichtung nach einem der Ansprüche 1 oder 2, **dadurch gekennzeichnet, dass** ein Federelement (36) zwischen dem Halteelement (26) und dem Festlegeabschnitt (14) vorgesehen ist.

4. Befestigungsvorrichtung nach Anspruch 3, **dadurch gekennzeichnet, dass** das Federelement (36) als Schraubenfeder ausgebildet ist.

5. Befestigungsvorrichtung nach Anspruch 3, **dadurch gekennzeichnet, dass** das Federelement (36) als Kegeldruckfeder ausgebildet ist.

6. Befestigungsvorrichtung nach einem der Ansprüche 1 bis 5, **dadurch gekennzeichnet, dass** die Befestigungsschraube (22) eine Schlossschraube umfasst.

7. Befestigungsvorrichtung nach einem der Ansprüche 3 bis 6, **dadurch gekennzeichnet, dass** die Befestigungsschraube (22) axial durch das Federelement (36) hindurchgeführt ist.

## Claims

1. A mounting device for a spaced-apart mounting of a support profile (1) on a roof substructure (3) with a roof hook (12), which comprises a mounting plate (13) and a setting portion (14) being arranged essentially parallel to the mounting plate (13) and having mounting means (21) for the support profile (1),
wherein the mounting means (21) comprises a mounting screw (22) and a retaining element (26), which comprises a retaining portion (27) for the support profile (1) as well as a through-opening (28) for the mounting screw (22),
wherein the retaining element (26) comprises a first side (29) and a second side (31), wherein the second side (31) is situated opposite to the first side (29) and faces the setting portion (14) of the roof hook (12),
**characterized in that**
the retaining element (26) comprises at least one abutment element (30) protruding from the first side (29) of the retaining element (26) for the support profile (1), whereby the support profile (1) that can be deposited on the setting portion (14) of the roof hook (12) can be hold.

2. The mounting device according to claim 1, **characterized in that** the retaining element (26) comprises at least two protrusions (32) protruding from the second side (31) of the retaining element (26), which engage at least in sections the setting portion (14) of the roof hook (12).

3. The mounting device according to any one of claims 1 or 2, **characterized in that** a resilient element (36) is provided between the retaining element (26) and the setting portion (14).

4. The mounting device according to claim 3, **characterized in that** the resilient element (36) is designed as a coil spring.

5. The mounting device according to claim 3, **characterized in that** the resilient element (36) is designed as a conical compression spring.

6. The mounting device according to any one of claims 1 to 5, **characterized in that** the mounting screw (22) comprises a carriage bolt.

7. The mounting device according to any one of claims 3 to 6, **characterized in that** the mounting screw (22) is axially passed through the resilient element (36).

## Revendications

1. Dispositif de fixation pour la fixation espacée d'un profil de support (1) à une sous-construction de toit (3) à l'aide d'un crochet de toit (12), qui présente une plaque de fixation (13) et une section d'arrêt (14) disposée de manière parallèle à la paque de fixation (13) ayant un moyen de fixation (21) pour le profil de support (1),
où le moyen de fixation (21) comprend une vis de fixation (21) et un élément de maintien (26), qui présente une section de maintien (27) pour le profil de support (1) ainsi qu'une ouverture de passage (28) pour la vis de fixation (22),
où l'élément de maintien (26) présente un premier côté (29) et un deuxième côté (31) où le deuxième côté (31) est opposé au premier côté (29) et fait face à la section d'arrêt (14) du crochet de toit (12),
**caractérisé en ce que**
l'élément de maintien (26) présente au moins un élément de butée (30) faisant saillie depuis un premier côté (29) de l'élément de maintien (26) pour le profil de support (1) grâce à quoi le profil de support (1) capable d'être déposé sur la section d'arrêt (14) du crochet de toit (12) est capable d'être maintenu.

2. Le dispositif de fixation selon la revendication 1, **caractérisé en ce que** l'élément de maintien (26) comprend au moins deux saillies (32) faisant saillie à partir du deuxième côté (31) de l'élément de maintien (26), qui saisissent au moins partiellement la section d'arrêt (14) du crochet de toit (12).

3. Le dispositif de fixation selon une des revendications 1 ou 2, **caractérisé en ce que** un élément de ressort (36) est prévu entre l'élément de maintien (26) et la section d'arrêt (14).

4. Le dispositif de fixation selon la revendication 3, **caractérisé en ce que** l'élément de ressort (36) est formé en tant que ressort hélicoïdal.

5. Le dispositif de fixation selon la revendication 3, **caractérisé en ce que** l'élément de ressort (36) est formé entant que ressort à compression conique.

6. Le dispositif de fixation selon une des revendications 1 à 5, **caractérisé en ce que** la vis de fixation (22) comprend un boulon de carrosserie.

7. Le dispositif de fixation selon une des revendications 3 à 6, **caractérisé en ce que** la vis de fixation (22) est passée à travers l'élément de ressort (36) de manière axiale.
